# EUROPEAN PATENT SPECIFICATION

(11) **EP 0 386 093 B1**
(45) Date of publication and mention of the grant of the patent: **09.06.1993**
(21) Application number: 88910070.7
(22) Date of filing: 14.11.1988
(51) Int. Cl.: B29C 53/74, B26D 7/20

(54) **MANDREL MEANS**
DORNKONSTRUKTION
MANDRIN

(30) Priority: 13.11.1987 GB 8726665
(43) Date of publication of application: 12.09.1990
(73) Proprietor: BRIDGESTONE/FIRESTONE, INC., Akron, Ohio 44317 (US)
(72) Inventor: PERKINS, David, John, Bridgwood, Liverpool L25 1PN (GB)
(74) Representative: Dearing-Lambert, Peter Richard
(86) International application number: GB8800989
(87) International publication number: WO8904756

(56) References cited:
- US-A- 3 391 041
- US-A- 3 885 594
- US-A- 4 092 889
- US-A- 4 137 804

## Description

This invention relates to a mandrel means and in particular, although not exclusively, to a mandrel mean suitable for use in the manufacture of reinforced ply fabric material of a kind utilised in the manufacture of radial or cross ply pneumatic tyres. The invention relates also to a mandrel means suitable for the production of a tubular article.

To produce tubular articles of a range of sizes by conventional techniques involving the use of a mandrel has the disadvantage that it is necessary to have available a range of mandrels of correspondingly-related sizes. Apart from the cost associated with the need to provide a number of mandrels there is the disadvantage of the not insignificant time needed for interchanging mandrels when it is decided to change the size of article being produced. Furthermore, the sizes of tubular article produced by the conventional technique is not infinitely variable but is restricted to a size related to that of one of the mandrels. An example of known mandrel means for the manufacture of a tubular article is that described in US patent US-A-3,885,594. This mandrel means comprises an array of fixed rollers over which a mandrel belt is moved in a helical manner so that reinforced strip applied to the mandrel belt is caused to move axially relative to the mandrel means. This enables a pipe to be manufactured in a continuous long length manner.

Particularly in the precision manufacture of certain types of flexible reinforced polymeric articles, such as pre-sized sheets of ply fabric material for use in automatic techniques for constructing pneumatic tyres, it is desirable to be able to control and also selectively vary the size of the article within close tolerances.

The present invention seeks to provide mandrel means which readily facilitates small changes in the size of an article produced with the aid of the mandrel means
In accordance with one of its aspects the present invention provides a mandrel means comprising at least two support drums rotatably mounted for rotation about respective axes, a belt guide means assembly and an endless support belt which extends around said drums and said belt guide means assembly and which defines at least in part a mandrel support surface, said belt guide means assembly comprising a pair of guide rollers arranged to divert the endless belt to follow an inwardly extending path between the support drums and thereby result in a peripheral discontinuity of the mandrel support surface, the relative spacing of said support drums being selectively variable and the belt guide means assembly comprising a belt control device cable relative to said drums and in engagement with the belt whereby the effective peripheral length of said mandrel support surface is variable in response to a change of relative spacing of said support drums.

The belt control device may be movable to maintain a tension, preferably a substantially constant tension, in the endless belt for any of a range of relative spacings of said support drums. The belt control device may be of a kind incorporating a spring-loaded member or like component which serves to maintain tension automatically without the need for adjustment upon change of relative spacing of said support drums.

Preferably the belt control device is in the form of a tension roller for engaging a portion of belt between said guide rollers, the tension roller being movable relative to said guide rollers and support drums to maintain tension in the belt for any of a range of relative spacings of said support drums.

The endless belt may be of inextensible material and preferably is formed of reinforced polymeric material such as a rayon reinforced synthetic rubber material.

The region of the discontinuity in the mandrel support surface may be employed to locate cutter means if it is desired to cut into a sheet a tubular article constructed on the mandrel means. The mandrel means may comprise a cutter control device operable to control movement of a cutter means. The cutter control device may, for example, cause the cutter means to operate only when the belt is not moving, or to move relative to the length of the mandrel means at a speed related to the speed of movement of the belt if it is desired to attain, for example, an obliquely extending cut.

The mandrel means additionally or alternatively may comprise an applicator control device to control the supply of material to the mandrel means, for example to control the supply of an elongate reinforced strip from a tape applicator to the mandrel means for helical winding around the mandrel means.

The invention also provides that the mandrel means may comprise lifting means such as a gas jet located in the region of the discontinuity in the mandrel support surface and operable to lift relative to the mandrel means a cut edge of an initially tubular article formed on said mandrel means.

An embodiment of a mandrel means in accordance with the present invention will now be described by way of example in connection with the manufacture of textile ply fabric for the production of a radial ply tyre with reference to the accompanying diagrammatic drawings, in which:
Figure 1 is a view of apparatus for forming tyre fabric,
Figure 2 is a sectional view of one form of the upper half of a tape,
Figure 3 is a sectional view of the lower half of a tape which is complimentary to the top half shown in Figure 2,
Figure 4 is a sectional view of another form of the upper half of a tape,
Figure 5 is a sectional view of the lower half of a tape which is complimentary to the top half shown in Figure 4,
Figure 6 is a sectional view of the composite consolidated tape produced by both forms shown in Figures 2, 3, 4 and 5,
Figure 7 is an isometric view of a mandrel means in accordance with the present invention showing a completed tubular winding of tape,
Figure 8 is a longitudinal section view of the final tubular ply fabric envelope as it appears on the mandrel means showing the special ends produced by use of a tape in the form shown in Figure 6,
Figure 9 is a view of the mandrel means at the ply cutting and removal station showing a cutter and clamps for gripping the ply on the carriage, prior to removal of the ply from the mandrel means,
Figure 10 is a view of a six-roll calender looking downstream and showing means of adjusting the width of tape and means of adjusting the final guage of the tape,
Figure 11 is a plan view of the apparatus showing that the winding station and the ply cutting/removal station may be part of a turret which may consist of one or more winding and ply/cutting removal stations. and
Figure 12 is a plan view of an alternative layout showing a shuttle system, whereby one tape producing apparatus winds tape onto one or other of two mandrel means fitted to a carriage which is able to shuttle from one ply cutting/removal station to another.

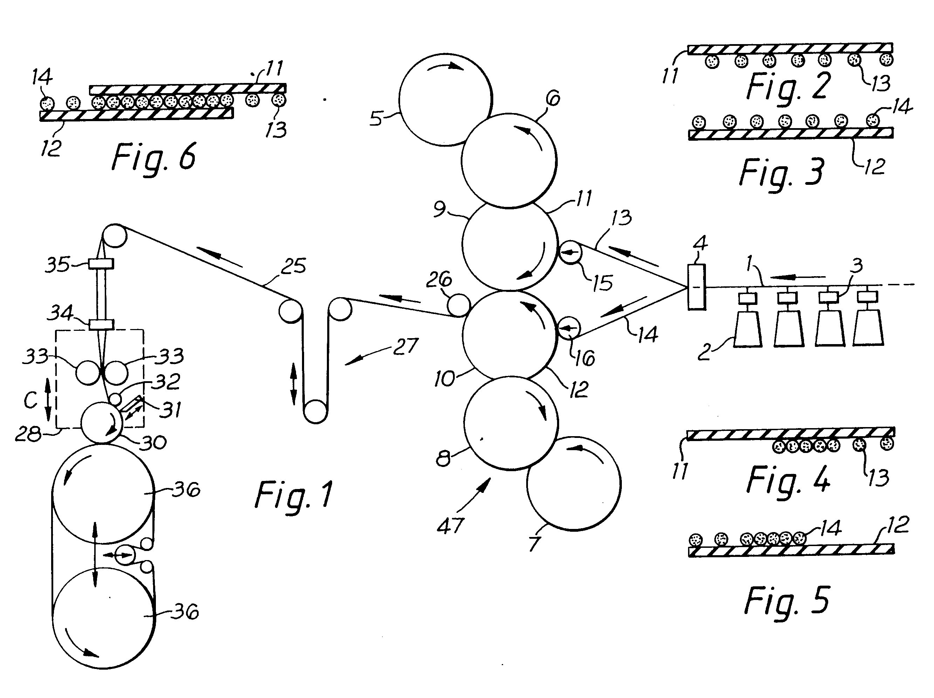

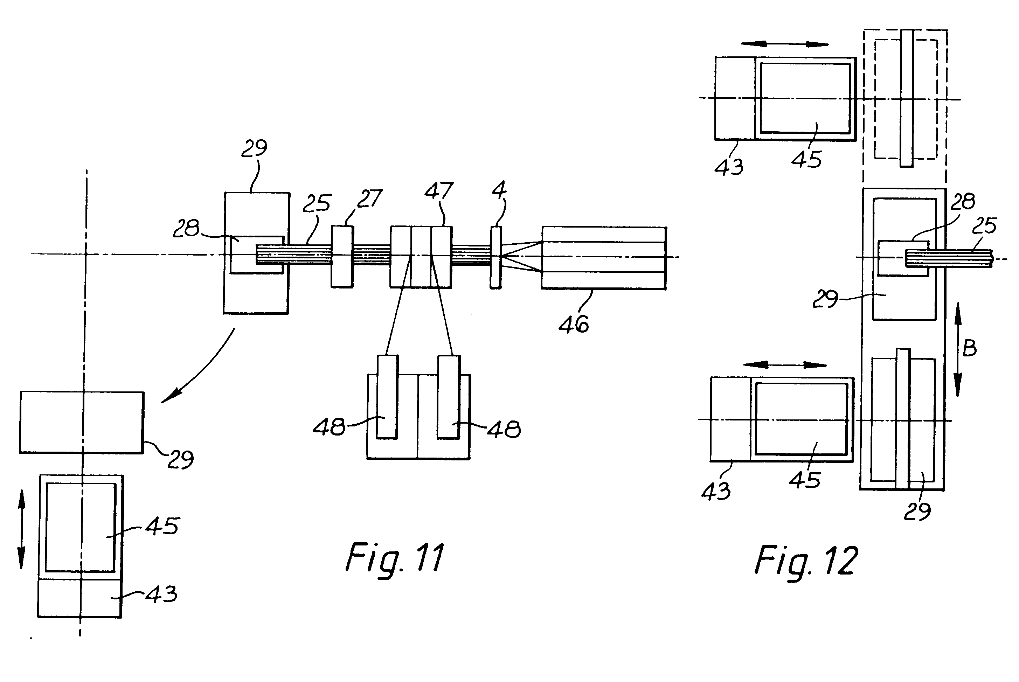

Referring first to Figures 1 - 4, Figure 1 shows a diagrammatic view of apparatus in which pre-treated cords 1 are fed from cheeses or cones 2 in a creel 46 (shown in Figure 11) through individual tensioning units 3 to a cord collecting frame 4.

At this point the cords may be divided into two sets of cords of many different configurations, prior to being fed into the central nip of a six-roll calender 47 (shown in more detail in figure 11). Rubbery compound produced by two small coil feed extruders 48 (see Figure 11) is introduced in rod form into the calender at two locations: firstly between calender rolls 5 and 6 and secondly between rolls 7 and 8 (see Figure 1).

A small rolling bank of compound (not shown) is maintained between rolls 6 and 9 and between rolls 8 and 10, these paired rolls respectively producing the upper 11 and lower 12 films of rubber for the construction of the tape.

Rolls 5, 7, 9 and 10 are male rolls which fit closely inside the female rolls 6 and 8. The rolls are constructed in such a manner that changes in width can quickly be achieved and bearings housing for the rolls are mounted in such a way that rubber guages can be changed easily.

An upper set of cords 13 from the collecting frame 4 passes over grooved guide and pressure roller 15, which embeds the cords into the rubber veneer 11 against the calender roll 9. Similarly a lower set of cords 14 from the collecting frame 4 passes over a grooved guide and pressure roller 16 which embeds the cords into the rubber veneer 12 against the calender roll 10.

The upper and lower sets of cords 13 and 14, respectively, are so arranged as to be complimentary to each other. For example, they may be arranged as shown in Figures 2 and 3, or Figures 4 and 5, or in a variety of other ways including those described in our aforementioned copending United Kingdom Patent Application of even date entitled "Flexible Reinforced Polymeric Material".

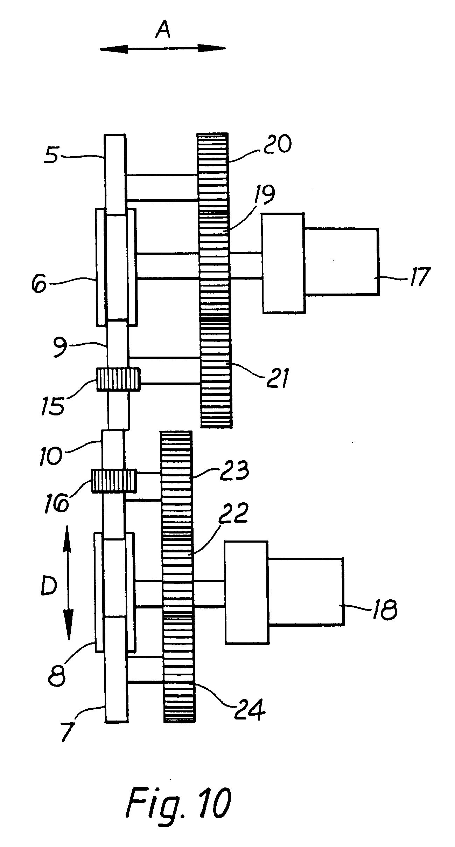

If either of the configurations shown in Figures 2 - 5 are used the final form of the tape appears as shown in Figure 6, with the upper and lower rubber veneers 11, 12 transversely offset. The staggering of the upper and lower veneers 11, 12 is achieved by offsetting the upper half of the calender with respect to the lower half, as shown in Figure 10. This offset is important in order to achieve the "jointless" ply construction.

The upper half of the calender, consisting of rolls 5, 6 and 9, is able to move sideways as indicated by arrow A of Figure 10 in order to achieve the offset. Geared motors 17 and 18 drive the upper and lower halves of the calender through respective gear sets 19, 20 and 21 and 22, 23 and 24. The final nip between rolls 9 and 10 is adjustable by movement of the lower half of the calender in the direction of arrow D in order to achieve the desired thickness of the resulting composite ply fabric tape 25. The ply fabric tape 25 is stripped off roll 10 by a contact roller 26 and then passes through a festoon 27, which controls the speed of the calender. The tape 25 is then fed to a tape applicator 28 which is able to traverse in the direction of arrow B of Figure 12 across the face of a mandrel means, hereinafter referred to as a mandrel 29, parallel to its axis, by means of a driven leadscrew (not shown).

The tape applicator 28 may be raised and lowered as shown by the direction of arrow C in Figure 1 and contains a laying/pressure roller 30, a cutter unit 31, gripping roller 32 and guide rollers 33. Also mounted on the tape applicator 28 are a pair of guide rollers 34 which, together with a similar pair of rollers 35 mounted on a fixed frame (not shown) positioned above and at a suitable distance from the lower rollers, turn the tape through 90 degrees in order to accommodate the oscillation of the applicator across the face of the winding member in the direction of arrow B.

The leading end of the tape 25 is laid onto the winding surface of mandrel 29 by lowering the applicator 28 so that the laying/pressure roller 30 makes contact with the winding surface. The speed of rotation of the winding surface, the advancement of the applicator carriage and the width of the tape are predetermind so as to give the correct amount of overlap of tape at each turn and the correct length of the envelope across the surface of the mandrel.

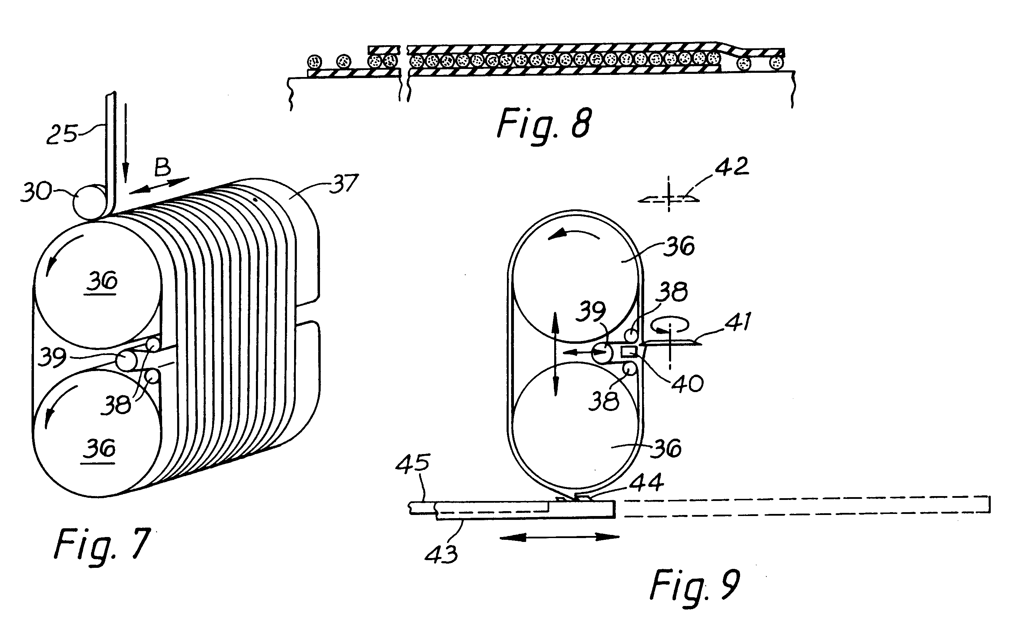

At the end of the run of tape 25 the mandrel stops in such a position that the end of the tape, when severed and laid on the surface, aligns axially with the start of the tape. The envelope of the wound tape is transverse on the mandrel and is shown in cross section in Figure 8.

The mandrel 29 comprises two drums 36. An endless belt 37 (see Figures 7 and 9) is fitted around the two drums 36 and passes around a belt guide means assembly in the form of a take-up station consisting of two idler rollers 38, a tension roller 39 and an air flotation unit 40. The tension roller 39 is mounted in a spring-loaded device whereby the roller serves to maintain substantially constant tension in the belt irrespective of change of spacing of the support drums.

A complete range of ply widths, measured along the cords 1, may thus be obtained by suitable selection of drum centre distances.

At the ply cutting and removal station a driven circular knife 41 is brought into a position (see Figure 9) at which it cuts through the ply envelope at an angle equal to the tape helix angle to give a 90 degree cut to the cord line.

During the cutting operation high pressure air is introduced to the flotation unit 40 to produce a gas (air) jet which raises the lip of the ply material. This unit is used with low pressure air for the initial transfer of the leading end of the tape across the gap in the belt at commencement of helical winding. Having cut a plurality of ply pieces the cutter may retract to its parked position 42 and a ply removal carriage 43 (see Figures 9, 11 and 12) moves into position under the mandrel.

A set of clamps 44 mounted on the carriage 43 grips the edge of the ply material and pulls the ply off the mandrel as the carriage moves outwards. During this operation the ply material is accurately positioned onto a component carrier 45 on which the ply is transported to the building drum of a tyre building machine.

It will be appreciated from the above description that the present invention facilitates a rapid change and infinite adjustment of the size of fabric produced on the mandrel. Thus in the case, for example, of fabric for use in applying to e.g. a tyre building former rapid change is possible by varying the total width of reinforcing tape wound helically around the mandrel and by adjusting the peripheral dimension of the mandrel.

## Claims

1. Mandrel means (29) comprising at least two support drums (36) rotatably mounted for rotation about respective axes, a belt guide means assembly (38,39,40), an endless support belt (37) which extends around said drums (36) and belt guide means assembly (38,39,40) and which defines at least in part a mandrel support surface, said belt guide means assembly comprising a pair of guide rollers (38) arranged to divert the endless belt to follow an inwardly extending path between the support drums (36) and thereby result in a peripheral discontinuity of the mandrel support surface, characterised in that the relative spacing of said support drums (36) is selectively variable and that said belt guide means assembly (38,39,40) comprises a belt control device (39) movable relative to said drums (36) and in engagement with the belt (37) whereby the effective peripheral length of said mandrel support surface is variable in response to a change of relative spacing of said support drums (36).

2. Mandrel means as claimed in claim 1, characterised in that the belt control device (3a) is movable to maintain a tension in the endless belt (37) for any of a range of relative spacings of said support drums (36).

3. Mandrel means as claimed in claim 2, characterised in that the belt control device (39) is movable to maintain a substantially constant tension in the endless belt (37).

4. Mandrel means as claimed in claim 2 or claim 3, characterised in that the belt control device (39) is operable to maintain tension in the belt (37) automatically upon change of relative spacing of said support drums (36).

5. Mandrel means as claimed in any one of the preceding claims, characterised in that the belt (37) comprises reinforced polymeric material.

6. Mandrel means as claimed in any one of the preceding claims, characterised in that the belt control device (39) engages an inward portion of the endless belt (37) lying between the guide rollers (38).

7. Mandrel means as claimed in any one of the preceding claims, characterised in that the belt control device is a roller (39) movable relative to at least one of said support drums (36).

8. Mandrel means as claimed in any one of the preceding claims, characterised in that it comprises a cutter control device operable to control movement of a cutter means (41) in the region of the discontinuity in the mandrel support surface.

9. Mandrel means as claimed in claim 8, characrterised in that the cutter control device is operable to cause cutter means (41) to move at a speed related to the speed of movement of the belt (37).

10. Mandrel means as claimed in claim 8 or claim 9, and characterised in that it comprises lifting means (40) located in the region of the discontinuity in the mandrel support surface and operable to lift relative to the mandrel surface a cut edge of an initially tubular article formed on said mandrel means.

11. Mandrel means as claimed in claim 10, characterised in that said lifting means comprises a gas jet (40).

12. Mandrel means as claimed in any one of the preceding claims, characterised in that it comprises an applicator control device (30) to control the supply of material to the mandrel means for helical winding around the mandrel means.

13. Mandrel means as claimed in claim 12, characterised in that said applicator control device (30) is operable for traversing movement over the width of the endless belt (37).

## Patentansprüche

1. Dorn (29), umfassend mindestens zwei Stütztrommeln (36), die zur Drehung um entsprechende Achsen drehbar gelagert sind, eine Gürtel- oder Bandführungsmittelanordnung (38,39,40), ein Endlostragband (37), der sich um die Trommeln (36) und die Bandführungsmittelanordnung (38,39,40) herum erstreckt und zumindest teilweise eine Dornstützfläche bildet, wobei die Bandführungsmittelanordnung ein Führungsrollenpaar (38) umfaßt, die so angeordnet sind, daß das Endlosband abgelenkt wird und einem nach innen sich erstreckenden Weg zwischen den Stütztrommeln (36) folgt, wodurch eine umfangsmäßige Diskontinuität der Dornstützfläche entsteht, dadurch gekennzeichnet, daß der relative Abstand der Stütztrommeln (36) wahlweise variabel ist, und daß die Bandführungsanordnung (38,39,40) eine Bandsteuerungsvorrichtung (39) umfaßt, die relativ zu den Trommeln (36) beweglich und in Eingriff mit dem Band (37) ist, wodurch die wirksame Umfangslänge der Dornstützfläche ansprechend auf eine Veränderung des relativen Abstands der Stütztrommeln (36) variabel ist.

2. Dorn nach Anspruch 1, dadurch gekennzeichnet, daß die Bandsteuerungsvorrichtung (3a) beweglich ist, um eine Spannung im Endlosband (37) für jeglichen Bereich der relativen Abstände der Stütztrommeln (36) aufrechtzuerhalten.

3. Dorn nach Anspruch 2, dadurch gekennzeichnet, daß die Bandsteuerungsvorrichtung (39) beweglich ist, um eine im wesentlichen konstante Spannung im Endlosband (37) aufrechtzuerhalten.

4. Dorn nach Anspruch 2 oder Anspruch 3, dadurch gekennzeichnet, daß die Bandsteuerungsvorrichtung (39) betätigbar ist, um eine Spannung im Band (37) automatisch nach einer Veränderung des relativen Abstandes der Stütztrommeln (36) aufrechtzuerhalten.

5. Dorn nach irgendeinem der vorstehenden Ansprüche, dadurch gekennzeichnet, daß das Band (37) verstärktes Polymermaterial umfaßt.

6. Dorn nach irgendeinem der vorstehenden Ansprüche, dadurch gekennzeichnet, daß die Bandsteuerungsvorrichtung (39) mit einem nach innen liegenden Teil des Endlosbandes (37), der zwischen den Führungsrollen (38) liegt, in Eingriff ist.

7. Dorn nach irgendeinem der vorstehenden Ansprüche, dadurch gekennzeichnet, daß die Bandsteuerungsvorrichtung eine Rolle (39) ist, die relativ zu mindestens einer der Stütztrommeln (36) beweglich ist.

8. Dorn nach irgendeinem der vorstehenden Ansprüche, dadurch gekennzeichnet, daß er eine Schneidsteuervorrichtung umfaßt, die betätigbar ist, um die Bewegung eines Schneidmittels oder Messers (41) im Bereich der Diskontinuität in der Dornstützfläche zu steuern.

9. Dorn nach Anspruch 8, dadurch gekennzeichnet, daß die Schneidsteuervorrichtung betätigbar ist, damit die Schneidvorrichtung oder das Messer sich mit einer Geschwindigkeit bewegt, die in Bezug steht zur Geschwindigkeit der Bewegung des Bandes (37).

10. Dorn nach Anspruch 8 oder Anspruch 9, dadurch gekennzeichnet, daß er ein Anhebungsmittel (40) umfaßt, das im Bereich der Diskontinuität in der Dornstützfläche angeordnet und betätigbar ist, entsprechend zur Dornfläche eine abgeschnittene Kante eines anfänglich schlauchförmigen Gegenstandes anzuheben, der auf dem Dorn geformt worden ist.

11. Dorn nach Anspruch 10, dadurch gekennzeichnet, daß das Anhebungsmittel eine Gasdüse bzw. -strahl (40) umfaßt.

12. Dorn nach irgendeinem der vorstehenden Ansprüche, dadurch gekennzeichnet, daß er eine Auftragungssteuervorrichtung (30) umfaßt, um den Nachschub des Materials zum Dorn zur schraubenförmigen Wicklung um den Dorn herum steuert.

13. Dorn nach Anspruch 12, dadurch gekennzeichnet, daß die Auftragungssteuervorrichtung (30) zur querlaufenden Bewegung über die Breite des Endlosbandes (37) betätigbar ist.

## Revendications

1. Mandrin (29) comprenant au moins deux tambours de support (36) montés rotatifs autour d'axes respectifs, un ensemble (38, 39, 40) de moyens de guidage d'une courroie, une courroie sans fin de support (37) qui est disposée autour desdits tambours (36) et dudit ensemble (38, 39, 40) de moyens de guidage de courroie et qui constitue au moins en partie une surface de support de mandrin, ledit ensemble de moyens de guidage de courroie comprenant deux rouleaux de guidage (38) disposés de manière à dévier la courroie sans fin de manière qu'elle suive un trajet orienté vers l'intérieur entre les tambours de support (36) et donc qu'il en résulte une discontinuité de la périphérie de la surface de support de mandrin, caractérisé en ce que la distance séparant lesdits tambours de support (36) est modifiable sélectivement et en ce que ledit ensemble (38, 39, 40) de moyens de guidage de la courroie comprend un dispositif (39) de commande de la courroie qui est mobile par rapport auxdits tambours (36) et qui est appliqué contre la courroie (37), de sorte que la longueur utile de la périphérie de ladite surface de support de mandrin est modifiable en réponse à un changement de la distance séparant lesdits tambours de support (36).

2. Mandrin selon la revendication 1, caractérisé en ce que le dispositif (3a) de commande de la courroie est mobile de manière à conserver une traction dans la courroie sans fin (37) pour toute valeur d'une plage de distances séparant lesdits tambours de support (36).

3. Mandrin selon la revendication 2, caractérisé en ce que le dispositif de commande (39) est mobile de manière à conserver une traction sensiblement constante dans la courroie sans fin (37).

4. Mandrin selon la revendication 2 ou la revendication 3, caractérisé en ce que le dispositif (39) de commande de la courroie fonctionne de manière à conserver automatiquement la traction dans la courroie (37) lors d'un changement de la distance séparant lesdits tambours de support (36).

5. Mandrin selon l'une quelconque des revendications précédentes, caractérisé en ce que la courroie (37) est en polymère armé.

6. Mandrin selon l'une quelconque des revendications précédentes, caractérisé en ce que le dispositif (39) de commande de la courroie est appliqué contre une partie intérieure de la courroie sans fin (37) qui est située entre les rouleaux de guidage (38).

7. Mandrin selon l'une quelconque des revendications précédentes, caractérisé en ce que le dispositif de commande de la courroie est un rouleau (39) mobile par rapport à au moins l'un desdits tambours de support (36).

8. Mandrin selon l'une quelconque des revendications précédentes, caractérisé en ce qu'il comprend un dispositif de commande d'un outil de coupe qui fonctionne de manière à commander le mouvement d'un outil de coupe (41) dans la région de la discontinuité de la surface de support de mandrin.

9. Mandrin selon la revendication 8, caractérisé en ce que le dispositif de commande d'outil de coupe fonctionne de manière à provoquer le déplacement de l'outil de coupe (41) à une vitesse qui est fonction de la vitesse du mouvement de la courroie (37).

10. Mandrin selon la revendication 8 ou la revendication 9, caractérisé en ce qu'il comprend un moyen de levage (40) placé dans la région de la discontinuité de la surface de support de mandrin et qui a pour fonction de soulever par rapport à la surface du mandrin un bord coupé d'un article initialement tubulaire formé sur ledit mandrin.

11. Mandrin selon la revendication 10, caractérisé en ce que ledit moyen de levage consiste en un jet de gaz (40).

12. Mandrin selon l'une quelconque des revendications précédentes, caractérisé en ce qu'il comprend un dispositif (30) de commande d'un applicateur qui commande l'arrivée de matière sur ledit mandrin de façon qu'elle soit enroulée en hélice autour dudit mandrin.

13. Mandrin selon la revendication 12, caractérisé en ce que ledit dispositif (30) de commande d'applicateur est destiné à lui faire suivre des mouvements de translation latérale sur la largeur de la courroie sans fin (37).
